# EUROPEAN PATENT SPECIFICATION

(11) **EP 2 963 875 B1**
(45) Date of publication and mention of the grant of the patent: **28.02.2018**
(21) Application number: 14175459.8
(22) Date of filing: 02.07.2014
(51) Int. Cl.: H04L 12/801, H04L 12/825, H04L 12/841, H04L 12/823

(54) **Method for processing data streams including time-critical messages of a power network**
Verfahren zur Verarbeitung von Datenströmen einschließlich zeitkritischer Nachrichten eines Stromnetzes
Procédé de traitement de flux de données comprenant des messages à durée critique d'un réseau d'énergie

(43) Date of publication of application: 06.01.2016
(73) Proprietor: ABB Schweiz AG, 5400 Baden (CH)
(72) Inventor: Locher, Thomas, 8050 Zürich (CH); Moga, Alexandru, 8800 Thalwil (CH)
(74) Representative: ABB Patent Attorneys

(56) References cited:
- US-A1- 2008 008 096
- US-A1- 2010 303 044
- ZHOURONG MIAO ET AL: "Optimal scheduling for streaming of scalable media", SIGNALS, SYSTEMS AND COMPUTERS, 2000. CONFERENCE RECORD OF THE THIRTY- FOURTH ASILOMAR CONFERENCE ON OCT. 29 - NOV. 1, 2000, PISCATAWAY, NJ, USA,IEEE, vol. 2, 29 October 2000 (2000-10-29), pages 1357-1362, XP010535222, ISBN: 978-0-7803-6514-8
- STAMATIA RIZOU ET AL: "Fulfilling end-to-end latency constraints in large-scale streaming environments", PERFORMANCE COMPUTING AND COMMUNICATIONS CONFERENCE (IPCCC), 2011 IEEE 30TH INTERNATIONAL, IEEE, 17 November 2011 (2011-11-17), pages 1-8, XP032077156, DOI: 10.1109/PCCC.2011.6108086 ISBN: 978-1-4673-0010-0

## Description

### FIELD OF THE INVENTION

The invention relates to the field of processing data in a stream processing network, in particular, to a method and a system for processing time-critical messages using a stream processing network.

### BACKGROUND OF THE INVENTION

Stream processing is a computer programming paradigm concerned with the processing of data that enters a processing system in the form of data streams being potentially unbounded in length. A stream processing system enables a user to perform computations on data that is arriving steadily and to output results continuously or periodically. In order to ensure fault-tolerance and scalability, stream processing systems are typically distributed systems, where the individual processing elements PEs are scattered over multiple interconnected computers. A PE is a logical entity in the stream processing system that takes some data streams as input, performs specific computations on the data items of these streams, and outputs its results in the form of one or more data streams.

Stream processing engines strive for short processing times even at high data rates. The small end-to-end latencies, from the time data is injected into the stream processing engine until the processed data is output, enables many essential online processing tasks such as live monitoring, anomaly detection, and trend analysis in large-scale systems. It is worth noting that commonly used stream processing engines, such as Storm or S4 undergoing incubation at the Apache Software Foundation, simply output results as fast as possible, e.g. in terms of "best-effort delivery".

However, for many applications, in particular in the industrial domain, there are specific constraints on end-to-end latency. An example is the concentration and analysis of a large number of measurements coming from phasor measurement units PMUs in power grids. For such time-constrained operations where results should be output within a certain time interval after the input data was generated, a high system load may incur substantial delays, which entails that many data items in the output may not satisfy the time constraints. Depending on the application, data arriving late may no longer be considered useful at all. This holds true, e.g., for monitoring applications or applications with real-time constraints US2010303044 A1 discloses a method and a system for credit based channel transmission scheduling (CBCTS) of packet data units (PDUs) on a downlink channel based on priority, quantity, and timing efficiency. The CBCTS technique includes initializing a set of credit accounts with a set of credit values. Credit accounts are sorted to determine the account having the highest number of credits. An account is selected from the set having an associated PDU type that is ready for transmission and has a size that fits within a MAC block. The selected PDU is inserted into the MAC block. The cost associated with the inserted PDU is subtracted from the credits. The selected PDU size is subtracted from the MAC block size, and a determination is made as to whether there is free space remaining on the MAC block for insertion of additional PDUs. If so, another sort and search is performed prior to transmission on the downlink channel. Further conventional approaches are for instances: a resilient plan for operator placement under end-to-end time constraints described in "Fulfilling end-to-end latency constraints in large-scale streaming environment, S. Rizou et al", the methods to deal with variance in load according to described in "Providing Resiliency to Load Variations in Distributed Stream Processing, Y. Xing et al", and to minimize latency dynamically based on load-correlation criteria according to "Dynamic load distribution in the Borealis Stream Processor, Y. Xing et al". However, none of these methods solves the above problems.

### DESCRIPTION OF THE INVENTION

The problem mentioned above are not adequately addressed with current stream processing technology. Therefore, there is a need to provide a method that dynamically increase throughput for stream processing applications with time constraints, where the throughput is usually defined as the number of data items that are processed by the stream processing mechanism such that time constraints are met.

These objectives are achieved by a method and a system according to the independent claims. Preferred embodiments are evident from the dependent patent claims.

The present invention provides a method for processing data stream within a time constraint by a stream processing network comprising a plurality of processing elements, according to independent claim 1. The system information of the processing unit may include load information such as system usage of the selected processing elements or of the host computer as well as the used communication path of the processing elements, e.g. CPU, RAM and bandwidth usage.

Preferably, each processing element is provided with a load management module for collecting the load information of the processing element.

Preferably, the method further comprises the step of maintaining the time constraint by a load control unit, e.g. storing and updating the time constraints in case of changes, where the time constraint may be variable over the time.

Preferably, the method further comprises the step of estimating the time in which the data items would be transmitted, prior to the step of discarding the data items.

Preferably, the method further comprises the steps of sending the system information from the load management module of the selected processing element to the load control unit, and receiving current time constraint required for the stream processing network, by the load management module of the selected processing element.

Preferably, the processing unit comprises a number n of selected processing elements. In this case, the method may further comprise the step of receiving, by the load management modules of the selected processing elements from the load control unit, the system information of the processing unit including the load information of the *n* selected processing elements. Alternatively, the load information of the *n* selected processing elements may be exchanged directly between the load management modules of the processing elements, without using the information provided by the load control unit.

The method according to the present invention takes both specific time constraints and the dynamics of input data and changes to the topology into account when determining whether to send data, store it locally or remotely for archiving purposes, or drop it as it can no longer satisfy the time constraints.

The present invention differs from the prior art solution in that it proposes a mechanism to dynamically manage the load on the PEs taking potentially varying time-constraints into account. The ability to react dynamically is advantageous as there may be unpredictable changes to the network, for example due to machine failures or the addition of computational resources. Changes in the processing load might also occur due to variable input data rates or due to the nature of the data items, which may incur significantly varying processing times. Some of the stream processing mechanisms in the state of the art may offer a certain degree of resilience and adaptability to failures and/or changing load. However, they provide either balancing the load dynamically based on the current input data as well as on the current configuration of the processing network, nor acting according to specific time constraints on the processing of the given input data.

The present invention provides following preferred advantages over the prior art: a) no data is output that does not satisfy the time constraints, b) the stream processing load is reduced automatically by dropping data items early, which allows the stream processing engine to allocate more resources to data items that will meet the time constraints - as a result, the output rate of data satisfying the time constraints will increase; and c) the dynamic and automatic distribution of load reduces bottlenecks and thus also leads to an increase of data throughput. Thus, for any given stream processing system, the present invention adds value by improving the performance of a stream processing task with time constraints. Moreover, improving the output rate for a given stream processing system can minimise the hardware requirements, i.e., hardware costs can be reduced.

### BRIEF DESCRIPTION OF THE DRAWINGS

The subject matter of the invention will be explained in more detail in the following text with reference to preferred exemplary embodiments that are illustrated in the attached drawings, in which:
Fig. 1 schematically shows a stream processing system that is enriched with load management modules LMMs running at each PE and a load control unit for storing the time constraints, according to the present invention,
Fig. 2 schematically shows that the LMMs send system information about the state of their PEs or host computers, such as CPU, bandwidth consumption, time constraints, to the load control unit and receive information about the global state from the load control unit directly, and
Fig. 3 schematically shows that the LMMs only receive the time constraints from the load control unit, and the system information is exchanged between the LMMs.

The reference symbols used in the drawings, and their primary meanings, are listed in summary form in the list of designations. In principle, identical parts are provided with the same reference symbols in the figures.

### DETAILED DESCRIPTION OF PREFERRED EMBODIMENTS

Hereinafter the present invention will be explained by means of exemplary embodiments illustrated in the figures.

According to the present invention, a load management module LMM may run on each processing element PE and can offer the following functions:
F1) Select the PE for sending the next data items. The stream processing platform or application logic may restrict the choice to a small number of possible PEs. In the worst case, there is only one possible target PE. The number of the PEs to be selected depends on the requirement of an application. It may refer to the number of recipients for outgoing data items and this is usually smaller than the total number of available processing elements in a stream processing system.
F2) Send a signal or message which may contain information about the current CPU, RAM, and bandwidth consumption, and other state information.
F3) Modify the sending rate if required. The LMM may cache outgoing data. The sending rate is increased by issuing cached data items at a faster rate if possible, or decreased by queuing up more data items, or remained unchanged if the selected processing elements perform optimally.
F4) Filter out, i.e., drop (queued) data items that would not be processed in time, i.e. they would not arrive the output of the processing system within the desired time period that can be defined in form of a time constraint.

Consequently, the LMM actively balances the load by increasing, decreasing, and routing data streams. The LMM operates by intercepting all incoming and outgoing data items, and applying its functions to the data items independently. As the stream processing engine is not aware of the LMM, the stream processing platform does not need to be modified.

In order to get an overview of the system status, an additional component, i.e. the load control unit LCU, is introduced by the present invention in a preferred embodiment. The LCU may be collocated with the centralized controller or process of the stream processing platform or may run on a different machine, potentially in a process external to the stream processing system. The LCU can be a fault-tolerant process just like the centralized controller. The LCU is further a central place to maintain the time constraints for the system, which may also change over time. The LCU can store and distribute the updates of the time constraints so that the current time constraint is communicated to the PEs.

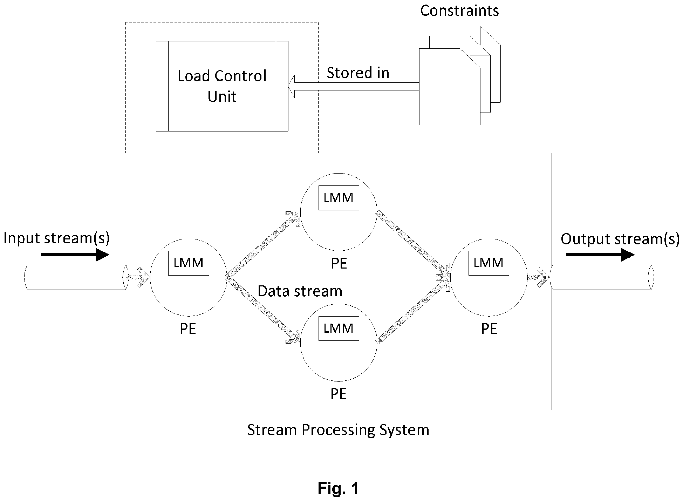

It is in the following assumed that all up-to-date time constraints are stored on the LCU. An overview of a stream processing system enriched with a LCU and LMMs running at the PEs is shown in Fig. 1.

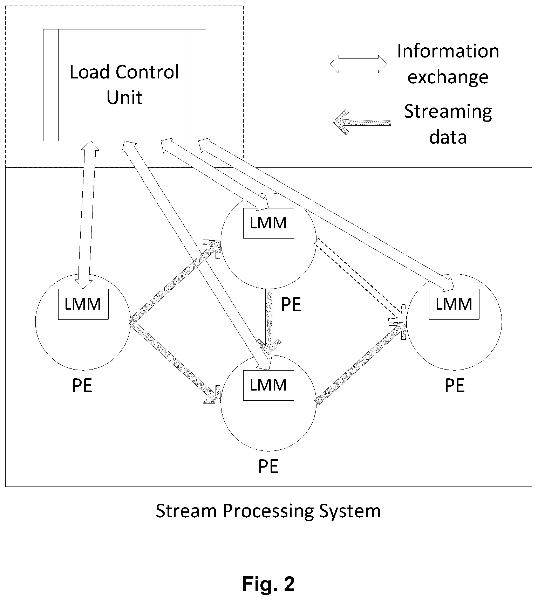

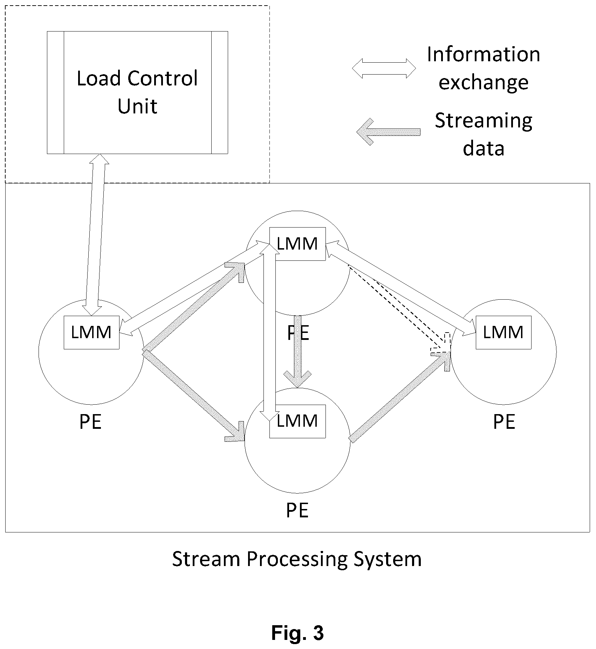

The LCU may run in two different exemplary modes as illustrated in Figs. 2 and 3: M1) each LMM sends signals and receives signals from the LCU. These messages can be exchanged periodically or on-demand; and M2) the LCU only sends out updated information about the time constraints. Other signals are exchanged between the LMMs directly.

In both modes, the data stream from the top-most PE is redirected to the PE at the bottom. In Mode M1, the LCU would be informed and the other PEs may learn about this change from LM if necessary. In Mode M2, the information is exchanged between the involved PEs directly. The arrow with stroked line illustrates the case that same data items are no longer sent from the PE at the top to the PE at the right, e.g. due to a high load on the PE at the right or a high bandwidth consumption in the communication path between the PE at the top and the PE at the right. Instead of that, these data items can be send from the PE at the top to the PE at the bottom.

Note that the modes are explained here as exemplary implementation embodiments. Each of these modes can be implemented alone or in combination with each other.

In the following, the present invention describes the functionality and steps to improve throughput while respecting time-constraints, according to two exemplary scenarios, i.e. either the system is not used optimally, in that the load is not distributed evenly, or the system is operating at or over its peak capacity. In the first scenario, the goal is to steer the system to a more efficient configuration while in the second scenario, the objective is to increase the amount of data that is still processed in time.

When discussing the scenarios, the present invention distinguishes between two different kinds of data transmission mechanisms:
(a)Pull-based stream processing system, where the receiving PE requests, i.e. pulls, the next data item or items from the sending PE whenever the receiving PE has sufficient capacity to process the next data item or items The pull-based systems have the advantage that the PEs are usually not overloaded as they only request data when capacity is available.
(b) Push-based system, where the sending PE autonomously sends, i.e. pushs, data items to the receiving PE. Push-based systems have the advantage that they do not have the overhead of continuously requesting data items. However, setting the sending rate correctly is more complex.

The method according to the present invention offers benefits for both approaches. As a receiving PE in a push-based system cannot directly influence the rate of the sending PE and is thus more prone to being overwhelmed, additional remedies specifically for push-based systems (PUSH) can be provided.

### Scenario 1

The data items are routed over sub-optimal paths through the stream processing network, i.e., some machines run at full capacity or are even overwhelmed, thereby resulting in increased latencies and data not being processed in time, while others are underutilized.

Remedy 1.1: The LMMs communicate to get information about the used paths and the CPU/bandwidth utilization as defined in function F2. The data streams or parts of the data streams, assuming a partitioning of the streams is possible, are rerouted to alleviate the load on the highly used machines, see function F1.

Remedy 1.2 (PUSH): The LMMs communicate to get information about the used paths and the CPU/bandwidth utilization as described in function F2). The LMMs increase/decrease the load on the highly utilized/underutilized machines by reducing/increasing the sending rate to these machines. If mode M2 is used, the decision to reduce the sending rate is forwarded recursively to the sending PEs as described in function F2 so that they can adapt their sending rates accordingly.

### Scenario 2

The load on the system is high, thereby resulting in data items not meeting their processing deadlines, i.e. within the time constraint.

Remedy 2.1: The LMMs send signals along the data stream paths to measure delays as described in function F2. These measurements enable the LMMs to estimate the remaining compute time of a data item when it arrives. If the data item is unlikely to be processed in time, it is dropped as describe in function F4, thereby freeing capacity in the system for other data streams.

Remedy 2.2 (PUSH): The sending rates are throttled to lower the load as described in function F3. If mode M2 is used, the decision to reduce the sending rate is forwarded recursively to the sending PEs as described in function F2 so that they can adapt their sending rates accordingly.

Note that verifying at each stage whether a data item can still meet its deadline is preferred, since this guarantees that all output data satisfies the time constraints.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. Method for processing data stream within a time constraint by a stream processing network comprising a plurality of processing elements, wherein the method comprises the steps of:
determining a processing unit, by selecting at least one of the plurality of processing elements, for transmitting next data items of the data stream,
collecting system information of the processing unit, wherein the system information includes load information of the selected processing element,
adapting, based on the system information, sending rate of the stream data,
estimating the time in which the data items would be transmitted, discarding, by the processing unit, data items of the data stream that would not be processed within the time constraint, and
sending, by the processing unit, data items of the data stream that would be processed within the time constraint.

2. Method according to claim 1, wherein each processing element is provided with a load management module for collecting the load information of the processing element.

3. Method according to any one of claims 1 to 2, further comprising:
maintaining the time constraint by a load control unit, wherein the time constraint is variable over the time.

4. Method according to any one of claims 2 to 3, further comprising:
sending the system information from the load management module of the selected processing element to the load control unit, and
receiving current time constraint required for the stream processing network, by the load management module of the selected processing element.

5. Method according to claim 3, wherein the processing unit comprises *n* selected processing elements, where *n* > 1.

6. Method according to claim 5, further comprising:
receiving, by the load management modules of the *n* selected processing elements from the load control unit, the system information of the processing unit including the load information of the *n* selected processing elements.

7. Method according to claim 5, further comprising:
exchanging, between the load management modules of the *n* selected processing elements, the load information of the *n* selected processing elements.

8. Method according to claims 6 or 7, further comprising:
adapting the number of processing elements *n* based on the load information of the *n* selected processing elements.

9. System of processing data stream within a time constraint by a stream processing network comprising a plurality of processing elements, wherein the system comprises:
a processing unit determined by selecting at least one of the plurality of processing elements, wherein the processing unit is configured to send a next data item of the data stream,
a load management module provided by the selected processing element, wherein the load management module is adapted to collect load information of the processing element,
wherein the system is configured to adapt sending rate of the stream data based on the system information, to estimate the time in which the data items would be transmitted, and to discard data items of the data stream that would not be processed within the time constraint.

10. System according to claim 9, further comprising:
a load control unit configured to maintain the time constraint, wherein the time constraint is variable over the time.

11. System according to any one of claims 9 to 10, wherein the load management module is adapted to send the system information to the load control unit, and wherein the load control unit is adapted to distribute current time constraint required for the stream processing network to the load management module.

12. System according to any one of claims 9 to 11, wherein the processing unit comprises *n* selected processing elements, where *n* > 1.

13. System according to claim 12, wherein the load management modules of the *n* selected processing elements are adapted to receive, from the load control unit, the system information of the processing unit including the load information of the *n* selected processing elements.

14. System according to claim 12, wherein the load management modules of the *n* processing elements are adapted to exchange the system information of the processing unit including the load information of the *n* selected processing elements.

## Patentansprüche

1. Verfahren zum Verarbeiten von Datenströmen innerhalb einer zeitlichen Beschränkung durch ein Stromverarbeitungsnetz, das mehrere Verarbeitungselemente umfasst, wobei das Verfahren die folgenden Schritte umfasst:
Bestimmen einer Verarbeitungseinheit durch Auswählen mindestens eines der mehreren Verarbeitungselemente zum Übertragen nächster Datenelemente des Datenstroms,
Sammeln von Systeminformationen der Verarbeitungseinheit, wobei die Systeminformationen Lastinformationen des ausgewählten Verarbeitungselements enthalten,
Anpassen der Senderate der Stromdaten anhand der Systeminformationen,
Schätzen des Zeitraums, in dem die Datenelemente übertragen werden würden,
Zurückweisen von Datenelementen des Datenstroms, die innerhalb der zeitlichen Beschränkung nicht verarbeitet werden würden, durch die Verarbeitungseinheit und
Senden von Datenelementen des Datenstroms, die innerhalb der zeitlichen Beschränkung verarbeitet werden würden, durch die Verarbeitungseinheit.

2. Verfahren nach Anspruch 1, wobei jedes Verarbeitungselement mit einem Lastmanagementmodul zum Sammeln der Lastinformationen des Verarbeitungselements versehen ist.

3. Verfahren nach einem der Ansprüche 1 bis 2, das ferner Folgendes umfasst:
Einhalten der zeitlichen Beschränkung durch eine Laststeuereinheit, wobei die zeitliche Beschränkung über den Zeitraum variabel ist.

4. Verfahren nach einem der Ansprüche 2 bis 3, das ferner Folgendes umfasst:
Senden der Systeminformationen von dem Lastmanagementmodul des ausgewählten Verarbeitungselements an die Laststeuereinheit und
Empfangen der aktuellen zeitlichen Beschränkung, die für das Stromverarbeitungsnetz vorausgesetzt ist, durch das Lastmanagementmodul des ausgewählten Verarbeitungselements.

5. Verfahren nach Anspruch 3, wobei die Verarbeitungseinheit *n* ausgewählte Verarbeitungselemente umfasst, wobei *n* > 1 ist.

6. Verfahren nach Anspruch 5, das ferner Folgendes umfasst:
Empfangen der Systeminformationen der Verarbeitungseinheit, die die Lastinformationen der *n* ausgewählten Verarbeitungselemente enthalten, durch die Lastmanagementmodule der *n* ausgewählten Verarbeitungselemente von der Laststeuereinheit.

7. Verfahren nach Anspruch 5, das ferner Folgendes umfasst:
Austauschen der Lastinformationen der *n* ausgewählten Verarbeitungselemente zwischen den Lastmanagementmodulen der *n* ausgewählten Verarbeitungselemente.

8. Verfahren nach Anspruch 6 oder 7, das ferner Folgendes umfasst:
Anpassen der Anzahl *n* von Verarbeitungselementen anhand der Lastinformationen der *n* ausgewählten Verarbeitungselemente.

9. System zum Verarbeiten von Datenströmen innerhalb einer zeitlichen Beschränkung durch ein Stromverarbeitungsnetz, das mehrere Verarbeitungselemente umfasst, wobei das System Folgendes umfasst:
eine Verarbeitungseinheit, die durch das Auswählen mindestens eines der mehreren Verarbeitungselemente bestimmt ist, wobei die Verarbeitungseinheit konfiguriert ist, ein nächstes Datenelement des Datenstroms zu senden,
ein Lastmanagementmodul, das durch das ausgewählte Verarbeitungselement bereitgestellt wird, wobei das Lastmanagementmodul dazu ausgelegt ist, Lastinformationen des Verarbeitungselements zu sammeln,
wobei das System konfiguriert ist, eine Senderate der Stromdaten anhand der Systeminformationen anzupassen, um den Zeitraum, in dem die Datenelemente gesendet werden würden, zu schätzen und um Datenelemente des Datenstroms, die innerhalb der zeitlichen Beschränkung nicht verarbeitet werden würden, zurückzuweisen.

10. System nach Anspruch 9, das ferner Folgendes umfasst:
eine Laststeuereinheit, die konfiguriert ist, die zeitliche Beschränkung einzuhalten, wobei die zeitliche Beschränkung über den Zeitraum variabel ist.

11. System nach einem der Ansprüche 9 bis 10, wobei das Lastmanagementmodul dazu ausgelegt ist, die Systeminformationen an die Laststeuereinheit zu senden, und wobei die Laststeuereinheit dazu ausgelegt ist, eine aktuelle zeitliche Beschränkung, die für das Stromverarbeitungsnetz benötigt wird, an das Lastmanagementmodul zu verteilen.

12. System nach einem der Ansprüche 9 bis 11, wobei die Verarbeitungseinheit *n* ausgewählte Verarbeitungselemente umfasst, wobei *n* > 1 ist.

13. System nach Anspruch 12, wobei die Lastmanagementmodule der *n* ausgewählten Verarbeitungselemente dazu ausgelegt sind, die Systeminformationen der Verarbeitungseinheit, die die Lastinformationen der *n* ausgewählten Verarbeitungselemente enthalten, von der Laststeuereinheit zu empfangen.

14. System nach Anspruch 12, wobei die Lastmanagementmodule der *n* Verarbeitungselemente dazu ausgelegt sind, die Systeminformationen der Verarbeitungseinheit, die die Lastinformationen der *n* ausgewählten Verarbeitungselemente enthalten, auszutauschen.

## Revendications

1. Procédé de traitement d'un flux de données dans une contrainte de temps par un réseau de traitement de flux comprenant une pluralité d'éléments de traitement, où le procédé comprend les étapes suivantes :
déterminer une unité de traitement, en sélectionnant au moins l'un de la pluralité d'éléments de traitement pour la transmission des éléments de données suivants du flux de données,
collecter des informations système de l'unité de traitement, où les informations système comprennent des informations de charge de l'élément de traitement sélectionné,
adapter, sur la base des informations système, la vitesse d'envoi des données de flux,
estimer le temps de transmission des éléments de données,
rejeter, par l'unité de traitement, les éléments de données du flux de données qui ne seraient pas traités dans le délai imparti, et
envoyer, par l'unité de traitement, les éléments de données du flux de données qui seraient traités dans le délai imparti.

2. Procédé selon la revendication 1, dans lequel chaque élément de traitement est muni d'un module de gestion de charge pour collecter les informations de charge de l'élément de traitement.

3. Procédé selon l'une quelconque des revendications 1 à 2, comprenant en outre l'étape suivante :
maintenir la contrainte de temps par une unité de contrôle de charge, où la contrainte de temps est variable dans le temps.

4. Procédé selon l'une quelconque des revendications 2 à 3, comprenant en outre les étapes suivantes :
envoyer les informations système depuis le module de gestion de charge de l'élément de traitement sélectionné vers l'unité de contrôle de charge, et
recevoir la contrainte de temps en cours requise pour le réseau de traitement de flux, par le module de gestion de charge de l'élément de traitement sélectionné.

5. Procédé selon la revendication 3, dans lequel l'unité de traitement comprend n éléments de traitement sélectionnés, où n > 1.

6. Procédé selon la revendication 5, comprenant en outre l'étape suivante :
recevoir, par les modules de gestion de charge des n éléments de traitement sélectionnés, depuis l'unité de contrôle de charge, les informations système de l'unité de traitement, y compris les informations de charge des n éléments de traitement sélectionnés.

7. Procédé selon la revendication 5, comprenant en outre l'étape suivante :
échanger, entre les modules de gestion de charge des n éléments de traitement sélectionnés, les informations de charge des n éléments de traitement sélectionnés.

8. Procédé selon les revendications 6 ou 7, comprenant en outre l'étape suivante :
adapter le nombre d'éléments de traitement, n, sur la base des informations de charge des n éléments de traitement sélectionnés.

9. Système de traitement d'un flux de données dans une contrainte de temps par un réseau de traitement de flux comprenant une pluralité d'éléments de traitement, où le système comprend :
une unité de traitement déterminée en sélectionnant au moins l'un de la pluralité d'éléments de traitement, où l'unité de traitement est configurée pour envoyer un élément de données suivant du flux de données,
un module de gestion de charge fourni par l'élément de traitement sélectionné, où le module de gestion de charge est adapté pour collecter des informations de charge de l'élément de traitement,
où le système est configuré pour adapter la vitesse d'envoi des données de flux sur la base des informations système, pour estimer le temps au cours duquel les éléments de données seraient transmis, et
pour écarter les éléments de données du flux de données qui ne seraient pas traités dans la contrainte de temps.

10. Système selon la revendication 9, comprenant en outre :
une unité de contrôle de charge configurée pour maintenir la contrainte de temps, où la contrainte de temps est variable dans le temps.

11. Système selon l'une quelconque des revendications 9 à 10, dans lequel le module de gestion de charge est adapté pour envoyer les informations système à l'unité de contrôle de charge, et où l'unité de contrôle de charge est adaptée pour distribuer la contrainte de temps en cours requise pour le réseau de traitement de flux au module de gestion de charge.

12. Système selon l'une quelconque des revendications 9 à 11, dans lequel l'unité de traitement comprend n éléments de traitement sélectionnés, où n > 1.

13. Système selon la revendication 12, dans lequel les modules de gestion de charge des n éléments de traitement sélectionnés sont adaptés pour recevoir, depuis l'unité de contrôle de charge, les informations système de l'unité de traitement, y compris les informations de charge des n éléments de traitement sélectionnés.

14. Système selon la revendication 12, dans lequel les modules de gestion de charge des n éléments de traitement sélectionnés sont adaptés pour échanger les informations système de l'unité de traitement, y compris les informations de charge des n éléments de traitement sélectionnés.
